# EUROPEAN PATENT APPLICATION

(11) **EP 3 474 117 A1**
(43) Date of publication of application: **24.04.2019**
(21) Application number: 18201411.8
(22) Date of filing: 19.10.2018
(51) Int. Cl.: G06F 3/01

(54) **DETERMINING A HAPTIC PROFILE USING A BUILT-IN ACCELEROMETER**

(30) Priority: 20.10.2017 US 201715789323
(71) Applicant: Immersion Corporation, San Jose CA 95134 (US)
(72) Inventor: Shah, Kaniyalal, Fremont, CA 94536 (US); Billington, Douglas G., Campbell, CA 95008 (US); Tran, Van H., San Jose, CA 95131 (US); Fleming, Jason D., San Jose, CA 95132 (US)
(74) Representative: Latscha Schöllhorn Partner AG

(57) **Abstract**

A haptic enabled system that is configured to render one or more haptic effects is provided. The haptic enabled system includes an actuator that is configured to render a haptic test pattern, a built-in accelerometer that is configured to collect acceleration data during the rendering of the haptic test pattern and according to a sampling rate of the built-in accelerometer, and a processor that is configured to calculate a haptic profile based on the acceleration data. The haptic effects are rendered according to the haptic profile.

## Description

### FIELD OF INVENTION

The embodiments of the present invention are generally directed to electronic devices, and more particularly, to electronic devices that produce haptic effects.

### BACKGROUND

Electronic device manufacturers strive to produce a rich interface for users. Conventional devices use visual and auditory cues to provide feedback to a user. In some interface devices, kinesthetic feedback (such as active and resistive force feedback) and/or tactile feedback (such as vibration, texture, and heat) is also provided to the user, more generally known collectively as "haptic feedback" or "haptic effects." Haptic feedback can provide cues that enhance and simplify the user interface. Specifically, vibration effects, or vibrotactile haptic effects, may be useful in providing cues to users of electronic devices to alert the user to specific events, or provide realistic feedback to create greater sensory immersion within a simulated or virtual environment.

Devices can be configured to coordinate the output of haptic effects with the output of other content, such as audio or video, so that the haptic effects are incorporated into the other content. For example, an audio effect developer can develop audio effects that can be output by the device, such as machine gun fire, explosions, or car crashes. Further, other types of content, such as video effects, can be developed and subsequently output by the device.

A haptic effect developer can author a haptic effect for the device, and the device can be configured to output the haptic effect along with the other content. However, the ability of the haptic effect developer to author a haptic effect that correctly compliments the other content is limited by the numerous types of actuators that may be on the user's device. A haptic effect that does not compliment the other effects can produce an overall dissonant effect where the haptic effect does not "mesh" with the other audio effect or other content. This type of user experience is generally not desired.

### SUMMARY OF THE INVENTION

Embodiments of the present invention are directed toward electronic devices configured to produce haptic effects that substantially improve upon the related art.

Features and advantages of the embodiments are set forth in the description which follows, or will be apparent from the description, or may be learned by practice of the invention.

In one example, a haptic enabled device that is configured to render one or more haptic effects is provided. The haptic enabled device includes an actuator that is configured to render a haptic test pattern, a built-in accelerometer that is configured to collect acceleration data during the rendering of the haptic test pattern and according to a sampling rate of the built-in accelerometer, and a processor that is configured to calculate a haptic profile for the haptic enabled device based on the acceleration data. The haptic effects are rendered according to the haptic profile.

### BRIEF DESCRIPTION OF THE DRAWINGS

Further embodiments, details, advantages, and modifications will become apparent from the following detailed description of the preferred embodiments, which is to be taken in conjunction with the accompanying drawings.
Fig. 1 is a block diagram of a haptically-enabled system/device according to an example embodiment of the invention.
Fig. 2 illustrates a flow diagram of functionality for generating a mobile device's haptic profile according to an example embodiment of the present invention.
Fig. 3 illustrates a flow diagram of functionality for collecting acceleration data used to generate a mobile device's haptic profile according to an example embodiment of the present invention.
Fig. 4 illustrates a flow diagram of functionality for generating an actuator response envelope of a mobile device's haptic profile according to an example embodiment of the present invention.
Fig. 5 illustrates a flow diagram of functionality for calculating a rise time of a mobile device's haptic profile according to an example embodiment of the present invention.
Fig. 6 illustrates a flow diagram of functionality for calculating a fall time of a mobile device's haptic profile according to an example embodiment of the present invention.
Fig. 7 illustrates a flow diagram of functionality for calculating a minimum ON time of the mobile device's haptic profile according to an example embodiment of the present invention.
Fig. 8 illustrates a flow diagram of functionality for calculating a minimum OFF time of the mobile device's haptic profile according to an example embodiment of the present invention.
Fig. 9 illustrates a flow diagram of functionality for determining whether an actuator driver circuit is adding any additional breaking during OFF time periods according to an example embodiment of the present invention.

### DETAILED DESCRIPTION:

Reference will now be made in detail to embodiments, examples of which are illustrated by the accompanying drawings. In the following detailed description, numerous specific details are set forth in order to provide a thorough understanding of the present invention. However, it will be apparent to one of ordinary skill in the art that the present invention may be practiced without these specific details. In other instances, well-known methods, procedures, components, and circuits have not been described in detail so as not to unnecessarily obscure aspects of the embodiments. Wherever possible, like reference numbers will be used for like elements.

The embodiments of the present invention provide systems, methods, and instructions for measuring and determining the haptic profile or haptic performance characteristics of a mobile device that includes a built-in (or "on-board") accelerometer. The haptic profile of the mobile device may vary depending on a variety of factors, including the type of actuator, actuator driver, actuator amplifier, software, operating system, or other components of the mobile device that contains the accelerometer. Implementation of the embodiments eliminates the conventional use of external measurement equipment to manually determine haptic performance characteristics for each mobile device by using the built-in accelerometer to determine its haptic profile on demand.

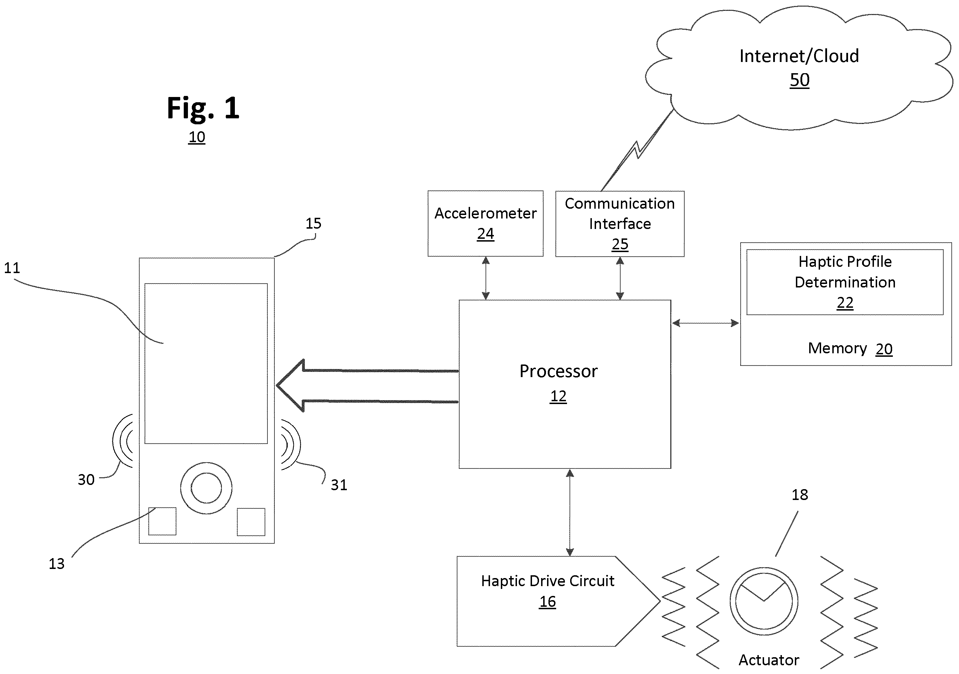

Fig. 1 is a block diagram of a haptically-enabled system/device 10 according to an example embodiment of the present invention. System 10 includes a touch sensitive surface 11 or other type of user interface mounted within a housing 15, and may include mechanical keys/buttons 13.

Internal to system 10 is a haptic feedback system that generates haptic effects on system 10 and includes a controller or processor 12. Coupled to processor 12 is a memory 20, and a haptic drive circuit 16 which is coupled to an actuator 18. Processor 12 may be any type of general purpose processor, or could be a processor specifically designed to provide haptic effects, such as an application-specific integrated circuit ("ASIC"). Processor 12 may be the same processor that operates the entire system 10, or may be a separate processor. Processor 12 determines what haptic effects are to be rendered and the order in which the haptic effects are rendered based on a variety of parameters (e.g., magnitude, frequency and duration) and the haptic profile of the device. The haptic feedback system in one embodiment generates vibrations 30, 31 or other types of haptic effects on system 10.

Processor 12 outputs the control signals to haptic drive circuit 16, which includes electronic components and circuitry used to supply actuator 18 with the required electrical current and voltage (*i.e.,* "motor signals") to cause the intended haptic effects. System 10 may include more than one actuator 18, and each actuator may include a separate haptic drive circuit 16, all coupled to a common processor 12.

Memory 20 may include a variety of transitory or non-transitory storage or computer-readable media that may be accessed by processor 12. In the various embodiments, memory 20 and other memory devices described herein may include a volatile and nonvolatile medium, removable and non-removable medium. For example, memory 20 may include any combination of random access memory ("RAM"), dynamic RAM ("DRAM"), static RAM ("SRAM"), read only memory ("ROM"), flash memory, cache memory, and/or any other type of non-transitory computer-readable medium. Memory 20 stores instructions executed by processor 12. Among the instructions, memory 20 includes a haptic profile determination module 22, which are instructions that, when executed by processor 12, determine the haptic profile of system 10 using a built-in accelerometer 24, as disclosed in more detail below. Memory 20 may also be located internal to processor 12, or any combination of internal and external memory.

System 10 may be any type of handheld/mobile device, such as a cellular telephone, personal digital assistant ("PDA"), smartphone, computer tablet, gaming controller/console, remote control, or any other type of device that includes a haptic effect system that includes one or more actuators. System 10 may be a wearable device such as wrist bands, headbands, eyeglasses, rings, leg bands, arrays integrated into clothing, etc., or any other type of device that a user may wear on a body or can be held by a user and that is haptically enabled. Except for actuator 18 and built-in accelerometer 24, some of the elements or functionality of system 10 may be remotely located or may be implemented by another device that is in communication with the remaining elements of system 10.

Actuator 18 may be any type of actuator or haptic output device that can generate a haptic effect. In general, an actuator is an example of a haptic output device, where a haptic output device is a device configured to output haptic effects, such as vibrotactile haptic effects, electrostatic friction haptic effects, temperature variation, and/or deformation haptic effects, in response to a drive signal. Although the term actuator may be used throughout the detailed description, the embodiments of the invention may be readily applied to a variety of haptic output devices. Actuator 18 may be, for example, an electric motor, an electro-magnetic actuator, a voice coil, a shape memory alloy, an electro-active polymer, a solenoid, an eccentric rotating mass motor ("ERM"), a harmonic ERM motor ("HERM"), a linear resonance actuator ("LRA"), a solenoid resonance actuator ("SRA"), a piezoelectric actuator, a macro fiber composite ("MFC") actuator, a high bandwidth actuator, an electroactive polymer ("EAP") actuator, an electrostatic friction display, an ultrasonic vibration generator, or the like. In some instances, the actuator itself may include a haptic drive circuit.

System 10 further includes a communication interface 25 that allows system 10 to communicate over the Internet/cloud 50. Internet/cloud 50 can provide remote storage and processing for system 10 and allows system 10 to communicate with similar or different types of devices. Further, any of the processing functionality described herein can be performed by a processor/controller remote from system 10 and communicated via interface 25. The various components of system 10, except actuator 18 and built-in accelerometer 24, may be located at a server remote from system 10, such as in an Internet based cloud device (not shown).

Haptic developers are often limited because the haptic profile or haptic performance characteristics of many mobile devices are not known or may be subject to large variances in performance. For example, there is a high degree of variance between similarly rated actuators. The variance is especially large between different actuator manufacturers, but is still significant among actuators produced by a single manufacturer. In addition, similarly rated actuators vary further as a result of using different mounting structures, driver circuits, application and operating system software, and the like. For at least these reasons, even similarly rated actuators frequently produce inconsistent haptic responses.

Known solutions attempt to manually determine the haptic performance characteristics for the most common commercially available mobile devices. As a result, known solutions cannot account for variations that occur within a particular model of mobile device. In addition, such techniques are generally limited to use of external accelerometers that require higher sampling rates, more processing power, and still require manual processes that are very complex and time intensive. Thus, manually determining the haptic performance characteristics for each commercially available mobile device would be very cumbersome. Moreover, the haptic performance characteristics of even a single model of a mobile device may vary depending on the country in which it is sold, for example. By contrast, the embodiments of the invention are directed to use of the built-in accelerometer to determine on demand or "on the fly" the haptic profile of any particular mobile device. By implementing the embodiments of the present invention, the haptic profile for any particular mobile device can be readily determined.

In order to reliably render haptic effects that are consistent with the haptic developer's intent, the haptic profile of the mobile device is determined. The rendering of the haptic effects may be adjusted based on the haptic profile. In some embodiments, the haptic profile may be calculated at the server that is communicatively coupled to the mobile device. When the haptic profile is retrieved for use to render improved haptic effects, the haptic profile is available to multiple mobile applications (e.g., multiple gaming applications). The haptic profile is available for use with any operating system ("OS") that supports the rendering of haptic effects including, but not limited to, Android OS. Accordingly, the improved haptic effects are available to all mobile applications of the host mobile device. A variety of variables or characteristics may be specified as part of the haptic profile of the mobile device. Example variables include rise time, fall time, rise curve, fall curve, linearization curve, minimum kick, brake time, and minimum effect play duration limit. Rise time is the time in milliseconds taken by the actuator to reach to 95% of the steady state peak acceleration starting from the rest state. Fall time is the time in milliseconds taken by the actuator to reach the rest state from 90% peak acceleration. The rise curve identifies the rate at which the actuator reaches to 95% of peak acceleration starting from the rest state. The fall curve identifies the rate at which the actuator reaches the rest state from 90% peak acceleration. The linearization curve is the envelope of the actuator response once in motion. Linearization techniques generally resolve points along the envelope which can be determined by running the actuator at various strengths. For example, the actuator may be driven by drive signals having a variety of magnitudes and/or a variety of durations. In some instances, such as devices using the Android OS, a linearization curve may not be used because the haptic test pattern only uses a maximum strength value. Other operating systems, and newer versions of Android OS, support additional application programming interfaces ("APIs") that include one or more support strength parameters. The minimum kick is the time in milliseconds for which actuator drive signal must be generated to get actuator in motion for the haptic experience. If braking is supported by the actuator, the brake time is the minimum time in milliseconds needed to stop the actuator from 90% peak acceleration. The stop or rest state of the actuator may be defined as a negligible vibration strength below 0.04g. The minimum effect play duration limit is the minimum time in milliseconds for which the actuator drive signal is generated by the system to render the haptic effect. The minimum effect play duration limit may depend on actuator drive circuit, implementation in the system, as well as the configuration used by system software to control the driver circuit.

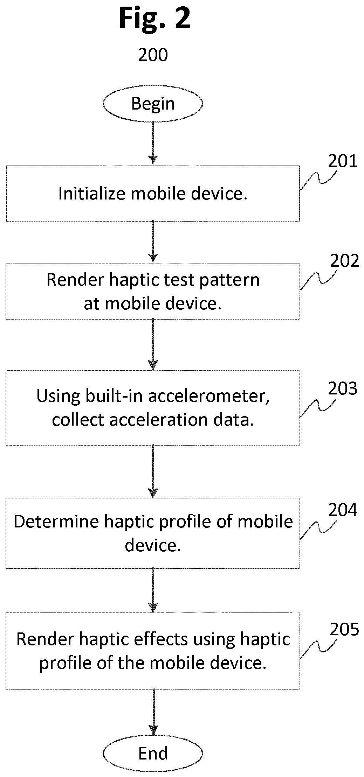

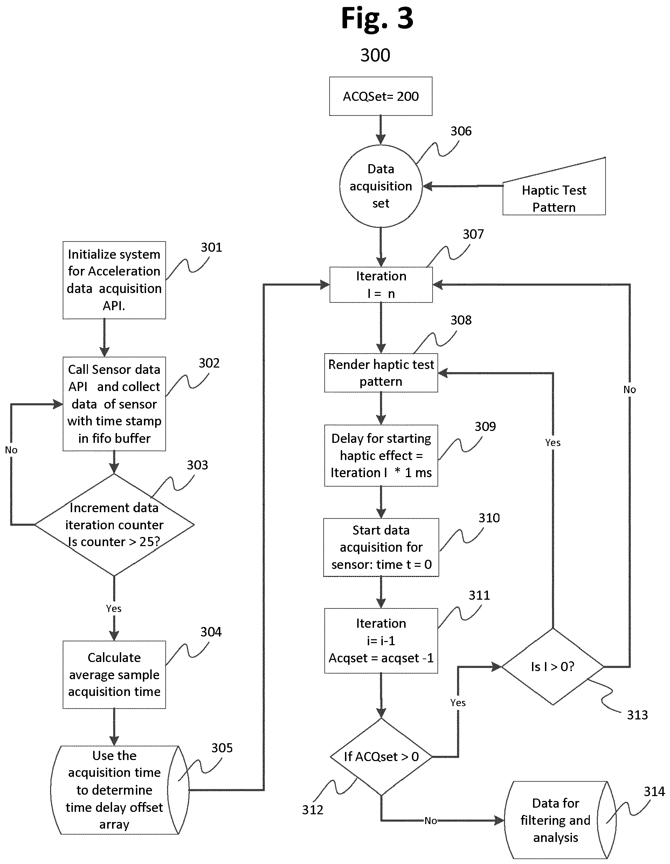

Fig. 2 illustrates a flow diagram of functionality 200 for generating a mobile device's haptic profile according to an example embodiment of the present invention. In some instances, the functionality of the flow diagram of Fig. 2 (and Figs. 3-9 below) is implemented by software stored in memory or other computer readable or tangible media, and executed by a processor. In other instances, the functionality may be performed by hardware (e.g., through the use of an application specific integrated circuit ("ASIC"), a programmable gate array ("PGA"), a field programmable gate array ("FPGA"), etc.), or any combination of hardware and software functionally implemented by system 10 of Fig. 1.

At the outset, functionality 200 may optionally initialize the mobile device, such as system 10 of Fig. 1, at 201. For example, functionality 200 may determine or otherwise initialize the respective configurations of the various components of the mobile device and its built-in actuator. For example, the state of the actuator, acceleration data collection and analysis modules, as well as various components of the mobile device may be initialized or otherwise configured using a mobile application or a settings menu.

Next, at 202, a haptic test pattern is rendered at the mobile device. The haptic test pattern may be stored as part of the mobile application, mobile device settings menu, or may be retrieved from a cloud based device, such as a device communicatively coupled to Internet/Cloud 50 of Fig. 1. For example, the haptic test pattern may include a series of ON/OFF periods for the actuator. Here, the ON periods may further include respective magnitude values that are variable. The haptic test pattern may be specified in a text or binary format.

For mobile devices using Android Vibrator, for example, the haptic test pattern may define actuator ON/OFF periods in which the haptic effects are rendered at maximum drive signal voltages. Here, each of the ON/OFF periods may have a duration of 500ms. The ON period of 500ms enables the actuator to reach steady-state motion. The typical time observed for various actuators to reach steady-state is 200-350ms. In addition, the OFF period of 500ms ensures that the actuator reaches to the rest or zero vibration state (*i.e.,* negligible vibration strength that is less than 0.04g) to eliminate any cascading effect in vibration measurements due to residual strength as a result of the previous vibration command.

Concurrently, as the haptic test pattern is being rendered, functionality 200 collects acceleration data that is detected by the built-in accelerometer, such as built-in accelerometer 24 of Fig. 1, at 203. In some configurations, functionality 200 may repeat 202 and 203 for a predetermined number of iterations in order to ensure that consistent acceleration data is collected from the accelerometer. Each data point within the acceleration data may include x-axis acceleration, y-axis acceleration, and z-axis acceleration that is associated with a time stamp that may be used to compare respective data points when 202 and 203 are repeated. Alternatively, each data point may include acceleration data along a single axis (x, y, or z) that includes the peak acceleration. In addition, the acceleration data is associated with a device model number, device serial number, and operating system version.

In some implementations, functionality 200 may repeat 202 and 203 in order to achieve 1kHz resolution in the collected or aggregated acceleration data. Accordingly, 202 and 203 may be repeated for a number of iterations that depends on the maximum sampling rate that can be achieved for the acceleration data. Alternatively, the number of iterations may be set to a predetermined number that provides sufficient redundancy in the acceleration data, such as 200 iterations. A lower number of iterations also may be used, even a single iteration, but the resulting haptic profile may not be as accurate as compared to the use of a higher number of iterations.

The accelerometer is configured to sample acceleration data at a predetermined sampling rate, such as every 4ms to 25ms. The sampling rate is the time at which the accelerometer senses the acceleration sensor and provides the acceleration data to the system. The sampling rate may vary depending on the mobile device, the operating system, or the accelerometer. Different mobile devices may utilize the embodiments of the invention at a variety of sampling rates. However, additional acceleration data may be collected at lower sampling rates. A greater number of data sets or iterations may be needed to achieve the 1kHz resolution in the collected or aggregated acceleration data. For example, a mobile device that has a sampling rate of 5ms may utilize 5 data sets to achieve 1 kHz resolution whereas another mobile device that has a sampling rate of 10ms may utilize 10 data sets to achieve the same 1kHz resolution. In some embodiments, functionality 200 may determine the minimum sampling rate that may be used to reconstruct the acceleration profile with sufficient accuracy. In other embodiments, functionality 200 may utilize a predetermined number of data sets (*e.g.,* 200) to ensure that that at least the preferred resolution (*e.g.,* 1 kHz) is achieved across commercially available mobile devices.

Subsequently, at 204, the haptic profile of the mobile device is determined. Using one or more computational algorithms, the acceleration data is used to generate a haptic profile for the mobile device. The haptic profile of the device may be determined at the mobile device itself, or alternatively, at the server that is communicatively coupled to the mobile device through Internet/Cloud 50 of Fig. 1. In some embodiments, it is preferable to determine the haptic profile at the server in order to reduce the computing resources used for software updates to the haptic profile determination modules.

To determine the haptic profile of the mobile device, one or more of the rise time, fall time, rise curve, fall curve, linearization curve, minimum kick, brake time, and minimum effect play duration limit is determined. The values of the various haptic profile parameters may vary depending on the haptic system software, drive circuit, and actuator. For example, for an actuator having a fast response time, such as an LRA, the minimum rise time might be as low as 5ms, while for slower actuators, the minimum rise time can be as high as the 100ms-200ms range. The haptic profile may be determined at the mobile device itself or may be determined remotely at a device communicatively coupled to Internet/Cloud 50 of Fig. 1. Lastly, the haptic effects are rendered at the mobile device according to its haptic profile, at 205.

Thus, using functionality 200, the mobile application renders the haptic test pattern and collects time-stamped acceleration data. The acceleration data is collected and used to generate the haptic profile that is specific to the user's mobile device. As part of the haptic profile, functionality 200 determines the envelope of the acceleration profile which also includes the rise time, fall time, rise curve, fall curve, linearization curve, minimum kick, brake time, and minimum effect play duration limit. Acceleration data that is collected and processed using functionality 200 can be used by the mobile device itself or may be transmitted to a remote device for future usage. Additionally, or alternatively, 204 of functionality 200 may be executed at a remote device, such as a cloud based device.

Fig. 3 illustrates a flow diagram of functionality 300 for collecting acceleration data used to generate a mobile device's haptic profile according to an example embodiment of the present invention.

At the outset, in order to determine the accelerometer sampling rate, functionality 300 initializes the mobile device for acceleration data acquisition, such as system 10 of Fig. 1, at 301. For example, functionality 300 may determine or otherwise initialize the respective configurations of the various components of the mobile device and its built-in actuator. For example, the state of the actuator, acceleration data collection and analysis modules, APIs, as well as various components of the mobile device may be initialized or otherwise configured using a mobile application or a settings menu. In another example, the mobile device is initialized for acceleration data acquisition in response to a connection to the server.

Subsequently, functionality 300 begins to collect acceleration data that is detected by the built-in accelerometer, such as built-in accelerometer 24 of Fig. 1, at 302. Initially, the acceleration data is used in order to determine the accelerometer's sampling rate. In some embodiments, the accelerometer's sensor data API is called to begin collection of the acceleration data. Each data point within the acceleration data may include x-axis acceleration, y-axis acceleration, and z-axis acceleration that is associated with a time stamp. Alternatively, each data point may include acceleration data along a single axis (x, y, or z) that includes the peak acceleration. In addition, the acceleration data is associated with a device model number, device serial number, and operating system version. The acceleration data may be stored within a buffer, such as a first-in-first-out ("FIFO") buffer.

At 303, a predetermined number of acceleration data sets are collected. In the example embodiment depicted in Fig. 3, 25 acceleration data sets are initially collected. Next, at 304, the average sample acquisition time is calculated. Subsequently, at 305, the calculated sample acquisition time is used to determine a time delay offset array that specifies how frequently the accelerometer collects the acceleration data, and the sampling rate is determined. For example, from the collected acceleration data, the timestamp difference between successive samples is calculated and the average of these values is calculated by adding all of the time differences divided by the number of samples minus 1. The acceleration data may be acquired with an initial time shift (*i.e.,* an increment of 1ms or less if feasible depending on the actuator type) while maintaining the same sampling rate.

After the sampling rate is determined, the haptic test pattern may be used to collect additional acceleration data and determine the haptic profile of the mobile device. As discussed above, the number of data sets or iterations may be varied according to the sampling rate. Alternatively, to simplify the software and process aspect of collecting the acceleration data, a fixed number of acceleration data sets may be used. In the example embodiment depicted in Fig. 3, the acceleration data set that is collected includes 200 iterations ("ACQSet" = 200), at 306. An iteration counter ("I") that tracks the number of acceleration data sets that have been collected is also set at 307.

Next, at 308, the haptic test pattern is rendered. At 309, the start of the rendering of the haptic test pattern may be delayed or offset. For example, the delay time may be determined according to the number of number of iterations, such as the delay time corresponding to the number of iterations in milliseconds. Subsequently, acceleration data is collected during each of the iterations, at 310.

At 311, the iteration variable is decremented. The iteration variable, which is initialized at 307, is used to determine the data sampling start delay, at 309, with respect to the haptic pattern start time. Alternatively, in some embodiments, the data sampling start delay is used to determine or set the iteration variable. When the iteration variable is decremented to a zero value, an acquisition variable ("Acqset") is used to continue collecting acceleration data at different starting delays. Functionality 300 determines whether the predetermined number of data sets has been collected, at 312. If the predetermined number of data sets has not yet been collected, according to the iteration variable and the acquisition variable, functionality 300 proceeds to 313. At 313, if the iteration variable is greater than zero, functionality 300 proceeds to render the haptic test pattern at 308. Otherwise, if the iteration variable is zero, functionality 300 proceeds to reset the iteration variable at 307. In other words, the acquisition variable represents the acceleration data acquisition set and the iteration variable represents data acquisition startup delay. Once the predetermined number of data sets is collected, functionality 300 proceeds to 314 and the collected acceleration data is filtered and analyzed to determine the mobile device's haptic profile.

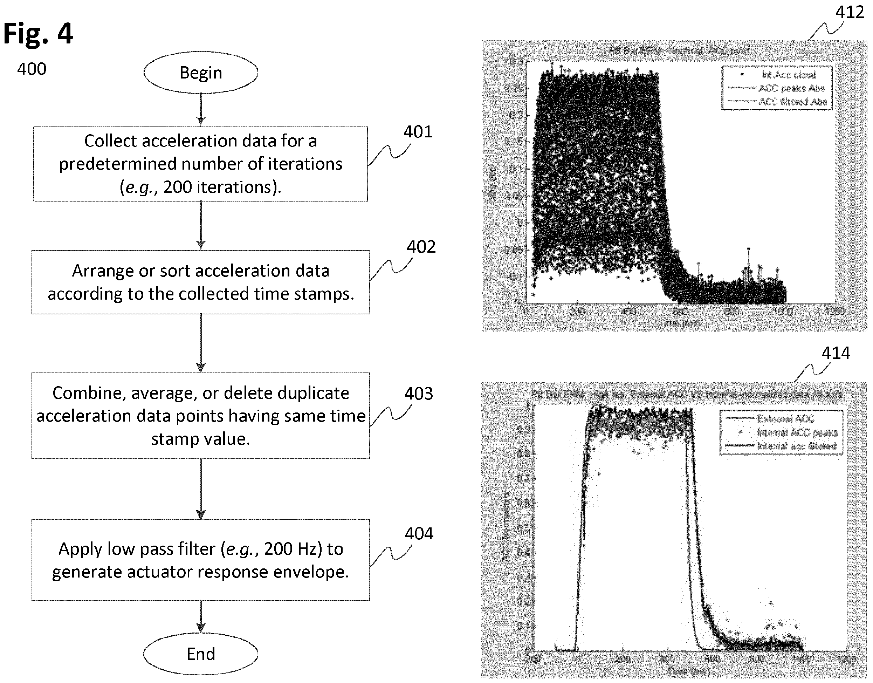

Fig. 4 illustrates a flow diagram of functionality 400 for generating the actuator response envelope of the mobile device's haptic profile according to an example embodiment of the present invention. At the outset, the acceleration data is collected at 401. The acceleration data may be collected in response to a haptic test pattern, as discussed above. For example, the acceleration data may be collected for a predetermined number of iterations of the haptic test pattern, such as 200 iterations which refers the number of times that the time haptic pattern is rendered and the number of times that the acceleration data is collected. In other words, the haptic pattern may be rendered 200 times to collect 200 sets of acceleration data.

Next, at 402, each data point in the acceleration data is arranged or sorted (*e.g.,* ascending, descending, by acceleration axis, etc.) according to its respective time stamp. Subsequently, at 403, duplicate data points may be combined or otherwise deleted. For example, data points having the having the same time stamp value may be deleted by using a median (*i.e.,* middle) or mean (*i.e.,* average) acceleration value of the duplicate acceleration data points. In another example, the collected acceleration may be combined or interleaved according to time stamped data to reconstruct the reconstruct the acceleration profile.

Lastly, a low pass filter (*e.g.,* 200Hz) is applied to the acceleration data to generate the actuator response envelope of the mobile device. The low pass filter eliminates any noise in the acceleration signals that are in lower frequency ranges. For the sake of a visual comparison, corresponding graphs 412 and 414 respectively illustrate the acceleration data (*e.g.,* a series of data points) gathered at 402 as compared to the filtered data generated at 404. In addition, each of graphs 412 and 414 illustrates the consistent acceleration data obtained using external and internal accelerometers. In the various embodiments, additional filters, peak detection, and other algorithms are used to generate the actuator response envelope while accounting for haptic start events used to find rise times and rise curves as well as and stop events used to find fall times and fall curves.

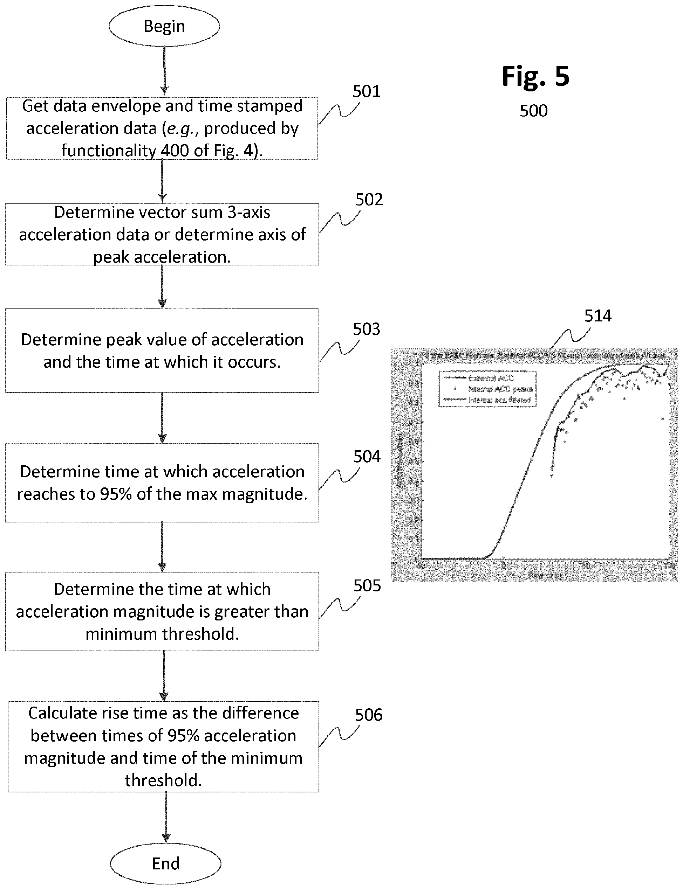

Fig. 5 illustrates a flow diagram of functionality 500 for calculating a rise time of the mobile device's haptic profile according to an example embodiment of the present invention. At the outset, functionality 500 retrieves the actuator response envelope, such as the envelope generated by functionality 400 of Fig. 4, at 501. Next, functionality 500 determines either the vector sum of the 3-dimensional acceleration data or determines the axis of peak acceleration, at 502. The peak value of acceleration and the time at which the peak occurs are determined at 503. The time at which acceleration reaches 95% of the maximum value is determined at 504. Subsequently, at 505, the time at which the acceleration magnitude is greater than the minimum threshold (*e.g.,* the actuator rest state with negligible vibration strength below 0.04g) is determined. Lastly, the rise time is calculated as the difference between the time at which the acceleration reaches 95% of the maximum value and the time at which the minimum threshold is reached.

Corresponding graph 514 visually depicts the time at which acceleration reaches 95% of the maximum value, which is approximately 50ms in this example. In addition, graph 514 illustrates the consistent acceleration data obtained using external and internal accelerometers.

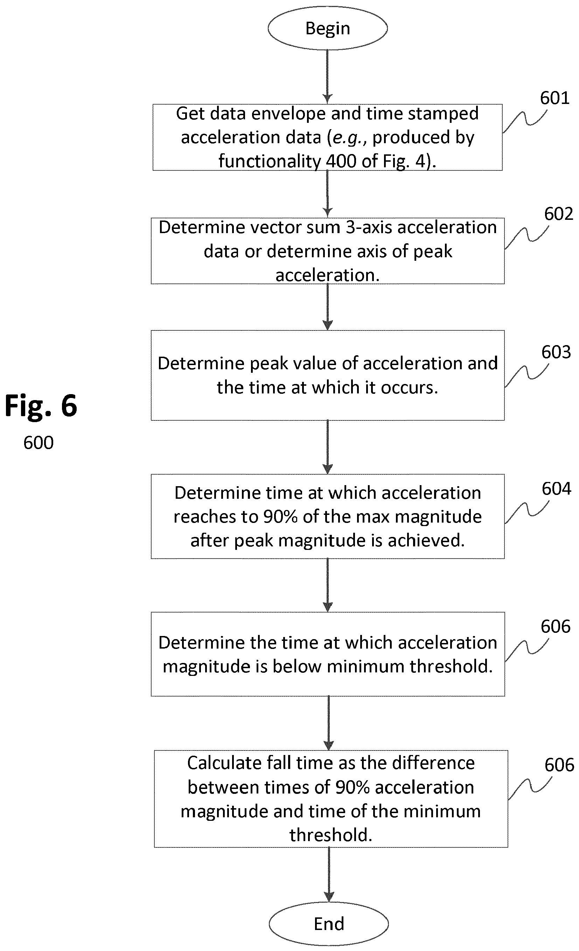

Fig. 6 illustrates a flow diagram of functionality 600 for calculating a fall time of the mobile device's haptic profile according to an example embodiment of the present invention. At the outset, functionality 600 retrieves the actuator response envelope, such as the envelope generated by functionality 400 of Fig. 4, at 601. Next, functionality 600 determines either the vector sum of the 3-dimensional acceleration data or determines the axis of peak acceleration, at 602. The peak value of acceleration and the time at which the peak occurs are determined at 603. The time at which acceleration reaches 90% of the maximum value after the maximum value was achieved is determined at 604. Subsequently, at 605, the time at which the acceleration magnitude is below than the minimum threshold (e.g., the actuator rest state with negligible vibration strength below 0.04g) is determined. Lastly, the fall time is calculated as the difference between the time at which the acceleration reaches 90% of the maximum value and the time at which the minimum threshold is reached.

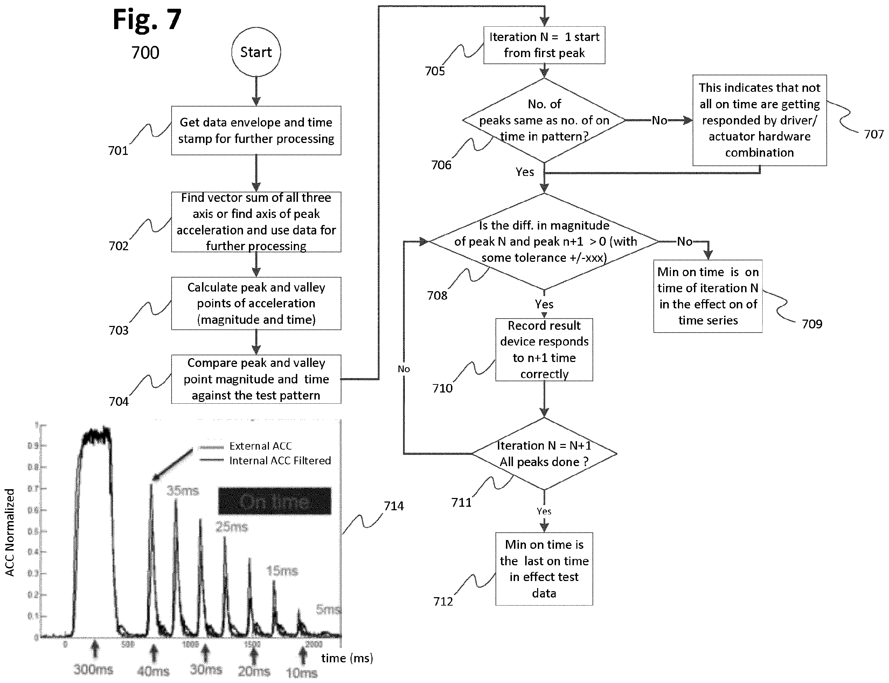

Fig. 7 illustrates a flow diagram of functionality 700 for calculating a minimum ON time of the mobile device's haptic profile according to an example embodiment of the present invention. The minimum ON time or the minimum effect play duration limit is the minimum time in milliseconds for which the actuator is configured to render the haptic effect.

At the outset, functionality 700 retrieves the actuator response envelope and the time-stamped acceleration data, at 701. Next, functionality 700 determines either the vector sum of the 3-dimensional acceleration data or determines the axis of peak acceleration, at 702. The peak and valley points are calculated according to magnitude and time values of the acceleration data, at 703. Subsequently, at 704, the peak and valley points of the acceleration data are compared against the haptic test pattern. An example haptic test pattern may indicate ON periods (in ms) followed by OFF periods (in ms), such as: "300, 200, 40, 160, 35, 165, 30, 170, 25, 175, 20, 180, 15, 185, 10, 190, 5, 195." Graph 714 graphically depicts this example haptic test pattern. In some embodiments, the first ON period, such as the first 300ms in this example, may optionally act as a reference time. As can be seen from the example test pattern, the minimum ON time is determined by iteratively applying shorter ON periods (e.g., 40, 35, 30, 25, ...).

Using an iterative process that begins at the first calculated peak, at 705, functionality 700 determines whether the number of peaks is equal to the number of ON periods in the haptic test pattern, at 706. If the number of peaks is not equal to the number of ON periods in the haptic test pattern, functionality 700 proceeds to 707 and an error indication may be provided to notify the user that the actuator, driver circuitry, and corresponding hardware/software is not responsive to all ON periods. Notwithstanding the error indication at 707, functionality 700 may nevertheless proceed to 708 based on the number of peaks that are calculated at 703. Also, if the number of peaks is equal to the number of ON periods in the haptic test pattern, functionality 700 proceeds to 708. At 708, functionality 700 determines whether the difference in magnitude between the current peak ("N") and the subsequent peak ("N+1") is greater than zero within a predetermined tolerance value (*e.g.,* +/- 2%). If the difference in magnitude between the current peak and the subsequent peak is not greater than zero, then it is determined that the minimum ON time is the ON time for the current peak, and functionality 700 terminates at 709. If the difference in magnitude between the current peak and the subsequent peak is greater than zero, functionality 700 may record the result that the mobile device responds to the subsequent peak correctly, at 710.

Next, at 711, functionality 700 determines whether there are additional peaks. If there are additional peaks, functionality 700 returns to 708 and proceeds through 709 or 710 for each subsequent peak. Lastly, if there are no additional peaks, functionality 700 determines that the minimum ON time is the last ON period in the haptic test pattern, at 712.

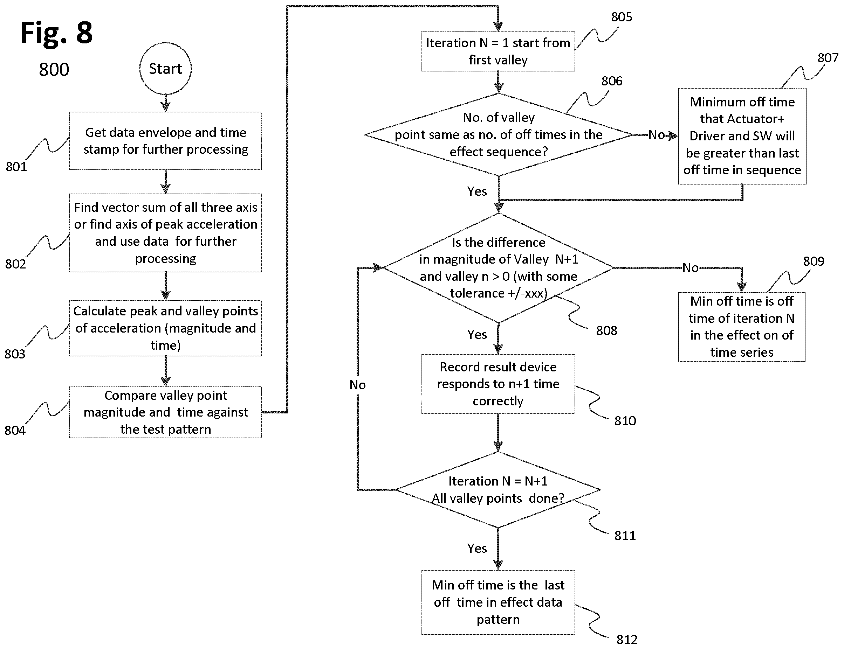

Fig. 8 illustrates a flow diagram of functionality 800 for calculating a minimum OFF time of the mobile device's haptic profile according to an example embodiment of the present invention.

At the outset, functionality 800 retrieves the actuator response envelope and the time-stamped acceleration data, at 801. Next, functionality 800 determines either the vector sum of the 3-dimensional acceleration data or determines the axis of peak acceleration, at 802. The peak and valley points are calculated according to magnitude and time values of the acceleration data, at 803. Subsequently, at 804, the peak and valley points of the acceleration data are compared against the haptic test pattern. An example test pattern may indicate ON periods (in ms) followed by OFF periods (in ms), such as: "35, 35, 35, 30, 35, 25, 35, 20, 35, 15, 35, 10, 35, 5, 35, 1000." As can be seen from the example test pattern, the minimum OFF time is determined by iteratively applying shorter OFF periods (*e.g.,* 35, 30, 25, 15, ...).

Using an iterative process that begins at the first calculated valley, at 805, functionality 800 determines whether the number of valleys is equal to the number of OFF periods in the haptic test pattern, at 806. If the number of valleys is not equal to the number of OFF periods in the haptic test pattern, functionality 800 proceeds to 807 and an error indication may be provided to notify the user that the actuator, driver circuitry, and corresponding hardware/software will calculate a minimum OFF time that is longer than the last OFF period in the haptic pattern. Notwithstanding the error indication at 807, functionality 800 may nevertheless proceed to 808 based on the number of valleys that are calculated at 803. Also, if the number of valleys is equal to the number of OFF periods in the haptic test pattern, functionality 800 proceeds to 808. At 808, functionality 800 determines whether the difference in magnitude between the current valley ("N") and the subsequent valley ("N+1") is greater than zero within a predetermined tolerance value (*e.g.,* please provide example tolerance value +/- 2%). If the difference in magnitude between the current valley and the subsequent valley is not greater than zero, then it is determined that the minimum OFF time is the OFF time for the current valley, and functionality 800 terminates at 809. If the difference in magnitude between the current valley and the subsequent valley is greater than zero, functionality 800 may record the result that the mobile device responds to the subsequent valley correctly, at 810.

Next, at 811, functionality 800 determines whether there are additional valleys. If there are additional valleys, functionality 800 returns to 808 and proceeds through 809 or 810 for each subsequent valley. Lastly, if there are no additional valleys, functionality 800 determines that the minimum OFF time is the last OFF period in the haptic test pattern, at 812.

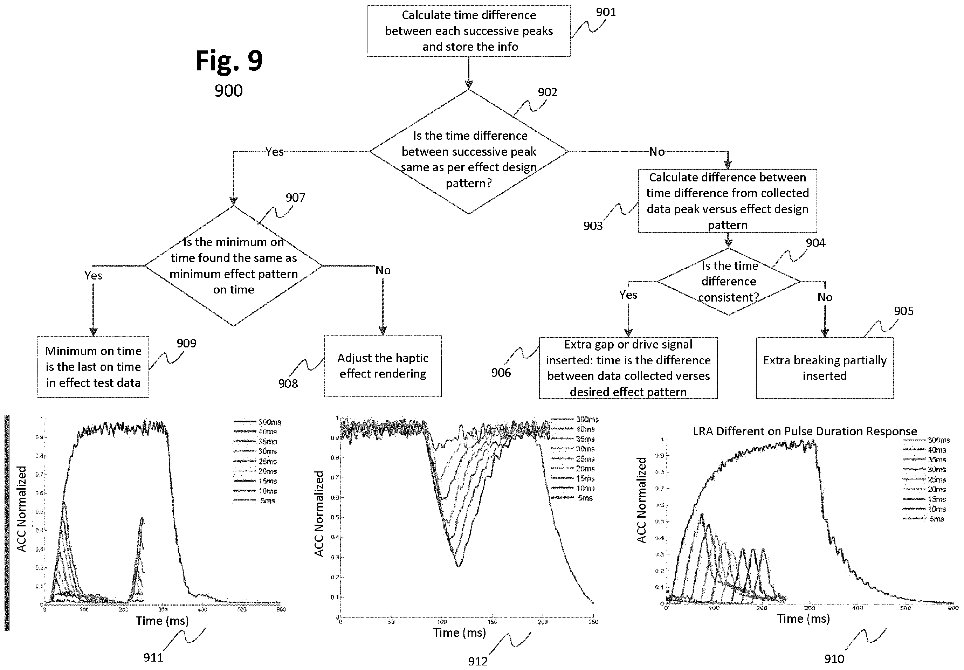

Fig. 9 illustrates a flow diagram of functionality 900 for determining whether an actuator driver circuit is adding any additional breaking during OFF time periods according to an example embodiment of the present invention.

At the outset, functionality 900 calculates the time differences between successive peaks. Next, at 902, functionality 900 determines whether the time differences between successive peaks are the same as the time differences between ON periods in the haptic test pattern. If the time differences between successive peaks are the not the same as time differences in the haptic test pattern, functionality 900 proceeds to 903. Here, for each peak and subsequent peak, functionality 900 calculates the difference between the expected time difference of the haptic test pattern and the actual time difference between peaks. Subsequently, functionality 900 determines whether the differences between the expected time differences and the actual time differences are consistent (*e.g.,* a uniform or fixed gap of 5ms). If the differences between the expected time differences and the actual time differences are not consistent, functionality 900 determines that extra kick/brake or other time may have been partially applied to some portions of the haptic test pattern, at 905. If the differences between the expected time differences and the actual time differences are consistent, then it is determined that an extra gap or breaking time is being applied by the actuator driver circuit, at 906. Graph 910 graphically depicts the calculation of the inserted breaking time. As shown, the acceleration level remains constant for 5ms, 10ms, and 15ms ON periods.

Returning to 902, if the time differences between successive peaks are the same as the time differences in the haptic test pattern, functionality 900 proceeds to 907. At 907, functionality 900 determines whether the minimum ON time is the same as the ON periods within the haptic test pattern. If the minimum ON time is not the same as the ON periods within the haptic test pattern, then one or more parameters may be used to adjust the haptic effect rendering of on/off times, at 908. If the minimum ON time is the same as the ON periods within the haptic test pattern, then functionality 700 determines that the minimum ON time is the last ON period in the haptic test pattern, at 909. Corresponding graphs 911 and 912 respectively depict the calculation of the minimum ON time and the minimum OFF time using the haptic test pattern.

As a result of being able to determine the haptic profile for any mobile device that includes a built-in accelerometer, the rendering of haptic effects is improved while still maintaining the intended haptic design for a wide range of mobile devices. Additionally, the data collected and processed can be sent to cloud with device type identifier to collect as a part of a database for subsequent use. For example, when an application of a mobile device requests to render haptic effects for a previously designed event from the server, the server can determine if it has an existing version of the haptic profile that matches with the mobile device. If so, the mobile device may retrieve the haptic profile to modify the haptic effects before rendering. Thus, the use of the existing haptic profile for a particular model of device enables use of all devices with same model without re-characterizing the individual device.

Additional Discussion of Various Embodiments
Embodiment 1 relates to a haptic enabled system configured to render one or more haptic effects. The haptic enabled system comprises a processor, an actuator, a built-in accelerometer, and a memory storing one or more programs for execution by the processor. The one or more programs include instructions for: determining a sampling rate for the built-in accelerometer; rendering a haptic test pattern; collecting acceleration data during the rendering of the haptic test pattern and according to the sampling rate; and calculating a haptic profile based on the acceleration data, wherein the haptic effects are rendered according to the haptic profile.
Embodiment 2 includes the haptic enabled system according to embodiment 1, wherein the haptic profile includes a rise time and a fall time for the actuator.
Embodiment 3 includes the haptic enabled system according to any one of embodiments 1 and 2, wherein the haptic test pattern includes a series of ON and OFF periods for the actuator.
Embodiment 4 includes the haptic enabled system according to any one of embodiments 1-3, wherein the acceleration data includes a plurality of data sets and duplicate acceleration data is deleted from the acceleration data.
Embodiment 5 includes the haptic enabled system according to any one of embodiments 1-4, wherein the acceleration data is processed by a low pass filter to determine a response envelope of the actuator.
Embodiment 6 includes the haptic enabled system according to any one of embodiments 1-5, wherein each data point within the acceleration data includes x-axis acceleration, y-axis acceleration, and z-axis acceleration values that are associated with a time stamp.
Embodiment 7 includes the haptic enabled system according to any one of embodiments 1-6, wherein the haptic profile is obtained from a single acceleration data set.
Embodiment 8 relates to a non-transitory computer readable storage medium storing one or more programs configured to be executed by a processor. The one or more programs comprise instructions for: determining a sampling rate for a built-in accelerometer; rendering, at an actuator of a haptic enabled device, a haptic test pattern; collecting, at the built-in accelerometer, acceleration data during the rendering of the haptic test pattern and according to the sampling rate; and calculating, at a processor, a haptic profile based on the acceleration data, wherein haptic effects are rendered at the haptic enabled device according to the haptic profile.
Embodiment 9 includes the non-transitory computer readable storage medium of embodiment 8, wherein the haptic profile includes a rise time and a fall time for the actuator.
Embodiment 10 includes the non-transitory computer readable storage medium of any one of embodiments 8 and 9, wherein the haptic test pattern includes a series of ON and OFF periods for the actuator.
Embodiment 11 includes the non-transitory computer readable storage medium of any one of embodiments 8-10, wherein the acceleration data includes a plurality of data sets and duplicate acceleration data is deleted from the acceleration data.
Embodiment 12 includes the non-transitory computer readable storage medium of any one of embodiments 8-11, wherein the acceleration data is processed by a low pass filter to determine a response envelope of the actuator.
Embodiment 13 includes the non-transitory computer readable storage medium of any one of embodiments 8-12, wherein each data point within the acceleration data includes x-axis acceleration, y-axis acceleration, and z-axis acceleration values that are associated with a time stamp.
Embodiment 14 includes the non-transitory computer readable storage medium of any one of embodiments 8-13, wherein the haptic profile is obtained from a single acceleration data set.
Embodiment 15 relates to a method for rendering one or more haptic effects. The method comprises: determining a sampling rate for a built-in accelerometer; rendering, at an actuator of a haptic enabled device, a haptic test pattern; collecting, at the built-in accelerometer, acceleration data during the rendering of the haptic test pattern and according to the sampling rate; calculating, at a processor, a haptic profile based on the acceleration data, wherein haptic effects are rendered at the haptic enabled device according to the haptic profile.
Embodiment 16 includes the method according to embodiment 15, wherein the haptic profile includes a rise time and a fall time for the actuator.
Embodiment 17 includes the method according to any one of embodiments 15 and 16, wherein the haptic test pattern includes a series of ON and OFF periods for the actuator.
Embodiment 18 includes the method according to any one of embodiments 15-17, wherein the acceleration data includes a plurality of data sets and duplicate acceleration data is deleted from the acceleration data.
Embodiment 19 includes the method according to any one of embodiments 15-18, wherein the acceleration data is processed by a low pass filter to determine a response envelope of the actuator.
Embodiment 20 includes the method according to any one of embodiments 15-19, wherein each data point within the acceleration data includes x-axis acceleration, y-axis acceleration, and z-axis acceleration values that are associated with a time stamp.
Embodiment 21 includes the method according to any one of embodiments 15-20, wherein the haptic profile is obtained from a single acceleration data set.
Embodiment 22 relates to a non-transitory computer readable storage medium storing one or more programs configured to be executed by a processor. The one or more programs comprise instructions for performing the method according to any one of embodiments 15-21.

One having ordinary skill in the art will readily understand that the invention as discussed above may be practiced with steps in a different order, and/or with elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention. In order to determine the metes and bounds of the invention, therefore, reference should be made to the appended claims.

## Claims

1. A haptic enabled system configured to render one or more haptic effects, the haptic enabled system comprising:
a processor;
an actuator;
a built-in accelerometer; and
a memory storing one or more programs for execution by the processor, the one or more programs including instructions for:
determining a sampling rate for the built-in accelerometer;
rendering a haptic test pattern;
collecting acceleration data during the rendering of the haptic test pattern and according to the sampling rate; and
calculating a haptic profile based on the acceleration data,
wherein the haptic effects are rendered according to the haptic profile.

2. The haptic enabled system according to claim 1, wherein the haptic profile includes a rise time and a fall time for the actuator.

3. The haptic enabled system according to any one of claims 1 and 2, wherein the haptic test pattern includes a series of ON and OFF periods for the actuator.

4. The haptic enabled system according to any one of claims 1-3, wherein the acceleration data includes a plurality of data sets and duplicate acceleration data is deleted from the acceleration data.

5. The haptic enabled system according to any one of claims 1-4, wherein the acceleration data is processed by a low pass filter to determine a response envelope of the actuator.

6. The haptic enabled system according to any one of claims 1-5, wherein each data point within the acceleration data includes x-axis acceleration, y-axis acceleration, and z-axis acceleration values that are associated with a time stamp.

7. The haptic enabled system according to any one of claims 1-6, wherein the haptic profile is obtained from a single acceleration data set.

8. A method for rendering one or more haptic effects, the method comprising:
determining a sampling rate for a built-in accelerometer;
rendering, at an actuator of a haptic enabled device, a haptic test pattern;
collecting, at the built-in accelerometer, acceleration data during the rendering of the haptic test pattern and according to the sampling rate; and
calculating, at a processor, a haptic profile based on the acceleration data,
wherein haptic effects are rendered at the haptic enabled device according to the haptic profile.

9. The method according to claim 8, wherein the haptic profile includes a rise time and a fall time for the actuator.

10. The method according to any one of claims 8 and 9, wherein the haptic test pattern includes a series of ON and OFF periods for the actuator.

11. The method according to any one of claims 8-10, wherein the acceleration data includes a plurality of data sets and duplicate acceleration data is deleted from the acceleration data.

12. The method according to any one of claims 8-11, wherein the acceleration data is processed by a low pass filter to determine a response envelope of the actuator.

13. The method according to any one of claims 8-12, wherein each data point within the acceleration data includes x-axis acceleration, y-axis acceleration, and z-axis acceleration values that are associated with a time stamp.

14. The method according to any one of claims 8-13, wherein the haptic profile is obtained from a single acceleration data set.

15. A non-transitory computer readable storage medium storing one or more programs configured to be executed by a processor, the one or more programs comprising instructions for performing the method according to any one of claims 8-14.
